# EUROPEAN PATENT APPLICATION

(11) **EP 4 675 761 A1**
(43) Date of publication of application: **07.01.2026**
(21) Application number: 24883869.0
(22) Date of filing: 20.05.2024
(51) Int. Cl.: H01M 10/613

(54) **COOLING STRUCTURE, BATTERY, AND ELECTRIC DEVICE**

(30) Priority: 30.10.2023 CN 202311423067
(71) Applicant: Contemporary Amperex Technology Co., Limited, Ningde, Fujian 352100 (CN)
(72) Inventor: LIAO, Boxiang, Ningde, Fujian 352100 (CN); QIN, Feng, Ningde, Fujian 352100 (CN); YANG, Haiqi, Ningde, Fujian 352100 (CN); HOU, Yuepan, Ningde, Fujian 352100 (CN); LI, Jie, Ningde, Fujian 352100 (CN)
(74) Representative: Lorenz Seidler Gossel Part. mbB
(86) International application number: PCT/CN2024/094212
(87) International publication number: WO 2025/091856

(57) **Abstract**

This application provides a cooling structure, a battery, and an electric apparatus. The cooling structure includes a side plate and a cooling channel disposed on at least one side of the side plate, and the side plate is configured to be deformable toward the side where the cooling channel is located, producing a deformable amount, where the side plate has varying deformable amounts in at least one direction. The side plate is deformable toward the side where the cooling channel is located, producing a deformable amount, where the deformable amount varies at different positions of the side plate. A side surface of a cooled component in contact with the side plate exhibits different degrees of swelling, and the different degrees of swelling exert different magnitudes of resistance force on different regions of the side plate. The varying deformable amounts on the side plate provide swelling spaces required for the different degrees of swelling, allowing the cooled component to swell differently according to changes in internal stress, thereby maintaining the normal service life or extending the service life of the cooled component.

## Description

### CROSS-REFERENCE TO RELATED APPLICATIONS

This application claims priority to Chinese Patent Application No. 202311423067.1, filed on October 30, 2023 and entitled "COOLING STRUCTURE, BATTERY, AND ELECTRIC APPARATUS", which is incorporated herein by reference in its entirety.

### TECHNICAL FIELD

This application relates to the field of new energy technology, and specifically, to a cooling structure, a battery, and an electric apparatus.

### BACKGROUND

Traction batteries or energy storage batteries generate heat during charging and discharging processes, and cooling structures are generally employed to dissipate the heat through contact cooling.

Different regions of a side surface of a battery in contact with the cooling structure exhibit different degrees of swelling, resulting in different resistance forces exerted on the surface of the cooling structure in contact with the different regions. In a case that the surface of the cooling structure provides consistent deformability, the surface of the cooling structure fails to meet different swelling demands of different regions of the battery, shortening the service life of the battery.

### SUMMARY

An objective of embodiments of this application is to provide a cooling structure, a battery, and an electric apparatus, including but not limited to solving the technical problem that the service life of batteries is shortened because existing cooling structures fail to meet the swelling demands of different regions of the batteries.

The embodiments of this application adopt the following technical solutions.

According to a first aspect, a cooling structure is provided, where the cooling structure includes a side plate and a cooling channel disposed on at least one side of the side plate; and the side plate is configured to be deformable toward the side where the cooling channel is located, producing a deformable amount, where the deformable amount varies at different positions of the side plate.

In the cooling structure provided in the embodiments of this application, at least one side of the side plate is provided with a cooling channel for allowing a cooling medium to flow through, and a cooled component and the side plate are in contact with each other to allow the cooling medium to take away heat from the cooled component.

The side plate is deformable toward the side where the cooling channel is located, producing a deformable amount, where the deformable amount varies at different positions of the side plate. A side surface of the cooled component in contact with the side plate exhibits different degrees of swelling, and the different degrees of swelling exert different magnitudes of resistance force on different regions of the side plate. The varying deformable amounts at different regions of the side plate provide swelling spaces required for the different degrees of swelling, and allowing the cooled component to swell differently according to internal stress, thereby maintaining the normal service life or extending the service life of the cooled component.

In some embodiments, from a central region of the side plate to an edge region of the side plate, the deformable amount of the side plate decreases.

Generally, the central region of the surface of the cooled component exhibits the greatest degree of swelling, with the degree of swelling gradually decreasing from the central region to the edge region. To match the swelling variation trend of the surface of the cooled component, the side plate is configured in a manner that the deformable amount decreases from the central region to the edge region, realizing alignment between the variation trend of the deformable amount and the swelling variation trend, thereby allowing the side plate to further meet the swelling demands of the cooled component.

In some embodiments, the side plate includes a first deformation portion, a second deformation portion, and a third deformation portion sequentially arranged from the central region of the side plate to the edge region of the side plate; where a deformable amount of the first deformation portion is greater than or equal to a deformable amount of the second deformation portion, and the deformable amount of the second deformation portion is greater than a deformable amount of the third deformation portion.

By dividing the side plate into multiple different plate portions from the central region to the edge region and differentiating and comparing the deformable amounts of these different plate portions to achieve a decreasing trend, the variation in deformable amount is more precise, thereby better matching the swelling demands of the cooled component.

In some embodiments, the side plate includes two second deformation portions and two third deformation portions; where the two second deformation portions are disposed on two opposite sides of the first deformation portion, and the two third deformation portions are disposed on two sides of the two second deformation portions facing away from the first deformation portion.

Considering that the central region has edge regions on any two opposite sides, the second deformation portions and third deformation portions are provided on two opposite sides of the first deformation portion, to ensure that the swelling demands of the cooled component are met across an entire contact region between the side plate and the cooled component.

In some embodiments, the cooling structure includes two side plates, the two side plates are disposed opposite each other, and the cooling channel is disposed between the two side plates.

The two side plates can both deform toward each other, and the cooled components can be disposed on both the sides of the two side plates facing away from each other. The cooled components on the two sides are both cooled via the cooling channel between the two side plates, increasing an integration degree while meeting the swelling demands of the cooled components.

In some embodiments, the cooling structure includes multiple partition plates disposed between the two side plates; where the partition plate extends along a first direction, the multiple partition plates are spaced apart along a second direction, and two adjacent partition plates and the two side plates enclose the cooling channel extending along the first direction; and in the second direction, from the central region to the edge region of the side plate, the deformable amount of the side plate decreases.

The multiple partition plates are spaced apart along the second direction, and the deformable amount of the side plate exhibits a variation trend in the second direction. This configuration is more conductive to achieve different configurations of the deformable amount by using the multiple partition plates, as compared to the configuration that the deformable amount of the side plate exhibits a variation trend in the first direction.

In some embodiments, in the second direction, from the central region to the edge region of the side plate, the side plate includes a first deformation portion, a second deformation portion, and a third deformation portion; where a deformable amount of the first deformation portion is greater than a deformable amount of the second deformation portion, and the deformable amount of the second deformation portion is greater than a deformable amount of the third deformation portion.

In the second direction, by dividing the side plate into multiple different plate portions from the central region to the edge region and differentiating and comparing the deformable amounts of these plate portions to achieve a decreasing trend, the variation in deformable amount in the second direction is more precise, thereby better matching the swelling demands of the cooled component in the second direction.

In some embodiments, the partition plates include a first partition plate connected to the first deformation portion at an angle and a second partition plate connected to the second deformation portion at an acute angle, where the acute angle between the second partition plate and the second deformation portion is smaller than the angle between the first partition plate and the first deformation portion.

From the edge region to the central region of the side plate, deformation resistance of the side plate exhibits a decreasing trend. The edge region has higher deformation resistance, helping to maintain a contour shape of the cooling structure; while the central region has relatively lower deformation resistance, helping to withstand resistance of the central region of the cooled component that exhibits the largest degree of swelling, and providing a corresponding deformation.

The third deformation portion has the highest deformation resistance, and the structures of the second deformation portion and the first deformation portion are substantially similar. Since the second deformation portion is close to the third deformation portion, the third deformation portion enhances the deformation resistance of the second deformation portion. Therefore, even though the structures of the second deformation portion and the first deformation portion are substantially similar, the deformation resistance of the second deformation portion is significantly higher than that of the first deformation portion due to an assisting and reinforcing effect of the third deformation portion.

To relatively reduce the deformation resistance of the second deformation portion, a deformable amount of the second deformation portion is increased to meet the swelling demands of a local region of the corresponding cooled component, but the deformation resistance is still lower than that of the third deformation portion and higher than that of the first deformation portion, and the angle between the second partition plate and the second deformation portion is set to an acute angle, so that the acute angle formed between the second partition plate and the second deformation portion is smaller than the angle formed between the first partition plate and the first deformation portion. A smaller angle is more conducive to increasing the deformable amount. The deformable amount of the second deformation portion is increased but remains less than that of the first deformation portion, so that the first deformation portion, the second deformation portion, and the third deformation portion exhibit a decreasing trend, meeting the swelling variation demands of the surface of the cooled component.

In some embodiments, the first partition plate is connected to the first deformation portion at an acute angle.

The first partition plate forms an acute angle or a right angle with the first deformation portion, where a smaller angle is more conductive to increasing the deformable amount. Compared to a right angle, an acute angle formed between the first partition plate and the first deformation portion is more conducive to increasing the deformable amount of the first deformation portion, so as to satisfy resistance of the central region of the cooled component that exhibits the largest degree of swelling and provide a corresponding deformation.

In some embodiments, one or more second partition plates are provided, and multiple first partition plates are provided; where a spacing between two adjacent second partition plates is greater than a spacing between two adjacent first partition plates; and/or, a spacing between a second partition plate and a first partition plate that are adjacent to each other is greater than the spacing between two adjacent first partition plates.

For a cooled component with higher swelling variation demands, solely adjusting the angle between the partition plate and the deformation portion is insufficient to provide a sufficient deformable space. Therefore, based on improvement of the angle between the partition plates and the deformation portion, improvement of the spacing between the partition plates is additionally provided. A larger spacing is more conductive to increasing the deformable amount, thereby providing a larger deformable amount to meet the higher swelling demands of the cooled component.

In some embodiments, the partition plates include one or more second partition plates connected to the second deformation portion and multiple first partition plates connected to the first deformation portion; where a spacing between two adjacent second partition plates is greater than a spacing between two adjacent first partition plates; and/or, a spacing between a second partition plate and a first partition plate that are adjacent to each other is greater than the spacing between two adjacent first partition plates.

To relatively reduce the deformation resistance of the second deformation portion, the deformable amount of the second deformation portion is increased to meet the swelling demands of a local region of the corresponding cooled component, but the deformation resistance is still lower than that of the third deformation portion and higher than that of the first deformation portion; and the spacing between two adjacent second partition plates and/or the spacing between an adjacent second partition plate and a first partition plate that are adjacent to each other is set to a large spacing, while the spacing between two adjacent first partition plates is set to a small spacing. A larger spacing is more conducive to increasing the deformable amount. The deformable amount of the second deformation portion is increased but remains less than that of the first deformation portion, so that the first deformation portion, the second deformation portion, and the third deformation portion decrease, meeting the swelling variation demands of the surface of the cooled component.

In some embodiments, the second partition plate is connected to the second deformation portion at an angle, the first partition plate is connected to the first deformation portion at an angle, and the angle between the second partition plate and the second deformation portion is less than or equal to the angle between the first partition plate and the first deformation portion.

For a cooled component with higher swelling variation demands, solely adjusting the spacing between partition plates is sufficient to provide a sufficient deformable space. Therefore, based on improvement of the spacing between the partition plates, improvement of the angle between the partition plate and the deformation portion is additionally provided. A smaller angle is more conducive to increasing the deformable amount, thereby providing a larger deformable amount to meet the higher swelling demands of the cooled component. The angle between the first partition plate and the first deformation portion and the angle between the second partition plate and the second deformation portion may both be acute angles or right angles.

In some embodiments, a plate thickness of the second partition plate is less than a plate thickness of the first partition plate; and/or, the number of the second partition plates is less than the number of the first partition plates.

For a cooled component with higher swelling demands, improving the spacing between the partition plates and/or the angle between the partition plate and the deformation portion is insufficient to provide a sufficient deformable space. Therefore, improvement of the plate thickness and/or the number of the partition plates is additionally provided. A smaller thickness of the plate thickness is conducive to increasing the deformable amount, and a smaller number is more conducive to increasing the deformable amount, thereby providing a larger deformable amount to meet the higher swelling demands of the cooled component.

In some embodiments, a plate thickness of the first deformation portion is the same as a plate thickness of the second deformation portion, a plate thickness of the second partition plate is the same as a plate thickness of the first partition plate, and a plate thickness of the third deformation portion is greater than the plate thickness of the first deformation portion and the second deformation portion.

The plate thickness of the third deformation portion being greater than the plate thickness of the first deformation portion and the second deformation portion helps to maintain a contour shape of the cooling structure. The plate thickness of the first deformation portion being the same as the plate thickness of the second deformation portion, and the plate thickness of the second partition plate being the same as the plate thickness of the first partition plate facilitate adaptive improvement of the angle between the partition plate and the deformation portion and the spacing between the partition plates without being affected by inconsistent plate thicknesses.

In some embodiments, the plate thickness of the third deformation portion gradually increases in a direction leaving the second deformation portion, and two end portions of the two third deformation portions of the two side plates far away from the second deformation portion are hermetically connected.

The two end portions of the two third deformation portions far away from the second deformation portion are hermetically connected, which enhances the deformation resistance of the third deformation portions, compensating for the reduction in deformation resistance of the third deformation portions caused by the configuration of the acute angle between the second partition plate and the second deformation portion.

According to a second aspect, a battery is provided, where the battery includes a battery cell and the cooling structure as described above, and at least one side of the side plate is in contact with a side surface of the battery cell.

In the battery provided by this embodiment of this application, at least one side of the side plate is provided with a cooling channel for allowing a cooling medium to flow through, and at least one side of the side plate is in contact with the battery cell, allowing the cooling medium to take away heat from the battery cell through contact. Different regions of the battery cell in contact with the side plate exhibit different degrees of swelling, and the different degrees of swelling exert different magnitudes of resistance force on different regions of the side plate. The varying deformable amounts at different regions of the side plate provide swelling spaces required for the different degrees of swelling, allowing different regions of the battery cell to swell adaptively according to changes in internal stress, thereby maintaining the normal service life or extending the service life of the battery cell.

In some embodiments, the battery cell is rectangular, and at least one side of the side plate is in contact with a largest surface of the battery cell.

The largest surface of the battery cell exhibits a significant swelling variation trend, with the central region exhibiting the largest degree of swelling, and the degree of swelling exhibits a decreasing trend from the central region to the edge region. At least one side of the side plate is in contact with the largest surface of the battery cell, thereby better matching the swelling demands of the largest surface.

In some embodiments, the cooling channel extends along the first direction, the battery includes multiple battery cells arranged sequentially along the first direction, and the largest surfaces of the multiple battery cells are all in contact with a same side of the side plate; and in a second direction perpendicular to the first direction, from the central region to the edge region of the side plate, the deformable amount of the side plate decreases.

The extension direction of the cooling channel is consistent with an arrangement direction of the multiple battery cells, enabling the cooling structure to efficiently cool the multiple battery cells. In the second direction, the deformable amount of the side plate is configured to exhibit a decreasing trend from the central region to the edge region, to meet the swelling demands of the largest surface of each battery cell disposed along the first direction.

According to a third aspect, an electric apparatus is provided, where the electric apparatus includes the battery as described above.

The electric apparatus provided in the embodiments of this application employs the battery provided by this application. The battery provided in the embodiments of this application employs the cooling structure provided in the embodiments of this application. The cooling structure allows different regions of the battery to swell adaptively according to changes in internal stress, reducing the possibility of adverse suppression on the swelling of the battery, thereby helping to improve the use safety of the battery and improve the safety of the electric apparatus.

The cooling structure provided in the embodiments of this application has the following benefits.

In the cooling structure provided in the embodiments of this application, at least one side of the side plate is provided with a cooling channel for allowing a cooling medium to flow through, and the cooled component and the side plate are in contact with each other to allow the cooling medium to take away heat from the cooled component. The side plate is deformable toward the side where the cooling channel is located, producing a deformable amount, where the deformable amount varies at different positions of the side plate. The side of the cooled component in contact with the side plate exhibits different degrees of swelling, and the different degrees of swelling exert different magnitudes of resistance force on different regions of the side plate. The varying deformable amounts at different regions of the side plate provide swelling spaces required for the different degrees of swelling, allowing the cooled component to swell differently according to internal stress, thereby maintaining the normal service life or extending the service life of the cooled component.

The battery provided in the embodiments of this application has the following benefits.

In the battery provided in the embodiments of this application, at least one side of the side plate is provided with a cooling channel for allowing a cooling medium to flow through, and at least one side of the side plate is in contact with the battery cell, allowing the cooling medium to take away heat from the battery cell through contact. Different regions of the battery cell in contact with the side plate exhibit different degrees of swelling, and the different degrees of swelling exert different magnitudes of resistance force on different regions of the side plate. The varying deformable amounts at different regions of the side plate provide swelling spaces required for the different degrees of swelling, allowing different regions of the battery cell to swell adaptively according to changes in internal stress, thereby maintaining the normal service life or extending the service life of the battery cell.

The electric apparatus provided in the embodiments of this application has the following benefits.

The electric apparatus provided in the embodiments of this application employs the battery provided by this application, and the battery provided in the embodiments of this application employs the cooling structure provided in the embodiments of this application. The cooling structure allows different regions of the battery to swell adaptively according to changes in internal stress, reducing the possibility of adverse suppression on the swelling of the battery, thereby helping to improve the use safety of the battery and improve the safety of the electric apparatus.

### BRIEF DESCRIPTION OF DRAWINGS

To more clearly illustrate the technical solutions in the embodiments of this application, the drawings required for use in the description of the embodiments or exemplary technical descriptions are briefly introduced below. It is apparent that the drawings described below are only some embodiments of this application, and those skilled in the art can still obtain other drawings based on these drawings without creative effort.
FIG. 1 is a schematic diagram of a battery from a first perspective according to an embodiment of this application;
FIG. 2 is a schematic diagram of a battery from a second perspective according to an embodiment of this application;
FIG. 3 is a cross-sectional view along A-A direction in FIG. 2;
FIG. 4 is a schematic diagram of a cooling structure according to an embodiment of this application;
FIG. 5 is a cross-sectional view along C-C direction in FIG. 4;
FIG. 6 is a cross-sectional view along B-B direction in FIG. 4; and
FIG. 7 is a schematic diagram of an electric apparatus according to an embodiment of this application.

### DESCRIPTION OF EMBODIMENTS

To make the objectives, technical solutions, and advantages of this application clearer, this application is further described in detail below with reference to the drawings and embodiments. It should be understood that the specific embodiments described herein are only used to explain the present invention and are not intended to limit this application.

It should be noted that when a component is referred to as being "fixed to" or "disposed on" another component, it may be directly on the another component or indirectly on the another component. When a component is referred to as being "connected to" another component, it may be directly or indirectly connected to the another component. The terms "upper", "lower", "left", "right", and the like indicate orientations or positional relationships based on the orientations or positional relationships shown in the drawings, and are only for convenience of description, not indicating or implying that the referred apparatus or element must have a specific orientation or be constructed or operated in a specific orientation, and thus should not be construed as limiting this application. For those skilled in the art, the specific meanings of the above terms can be understood according to specific circumstances. The terms "first" and "second" are used only for convenience of description and should not be understood as indicating or implying relative importance or implicitly indicating the number of technical features. The term "multiple" means two or more, unless explicitly and specifically limited otherwise.

Traction batteries or energy storage batteries generate heat during charging and discharging processes, and cooling structures are generally employed to dissipate the heat through contact cooling. For example, a cooling plate is attached to the surface of the battery in a contact manner, where the cooling plate is internally provided with a medium channel for allowing a cooling medium to flow through.

The surface of the battery swells due to the heat in the battery, and different regions on the surface of the battery exhibit different degrees of swelling. Generally, a central region of the surface of the battery exhibits the largest degree of swelling, and the swelling exhibits a decreasing trend from the central region to the edge region.

The deformation of the cooling structure provides the space required for swelling and expansion of the battery. Generally, the side plate of the cooling structure is in contact with the surface of the battery, and the interior of the cooling structure is divided into multiple medium channels by plate structures. The side plate is of a uniform plate thickness, the plate thicknesses of the multiple plate structures are consistent, the connection angles of the plate structures to the side plate are consistent, and the cooling structure is of a uniform deformability.

In a case that the cooling structure provides uniform deformability, the deformation of the surface of the cooling structure cannot meet different swelling demands of different regions of the surface of the battery, preventing different regions of the battery from swelling adaptively according to changes in internal stress, thereby shortening the service life of the battery.

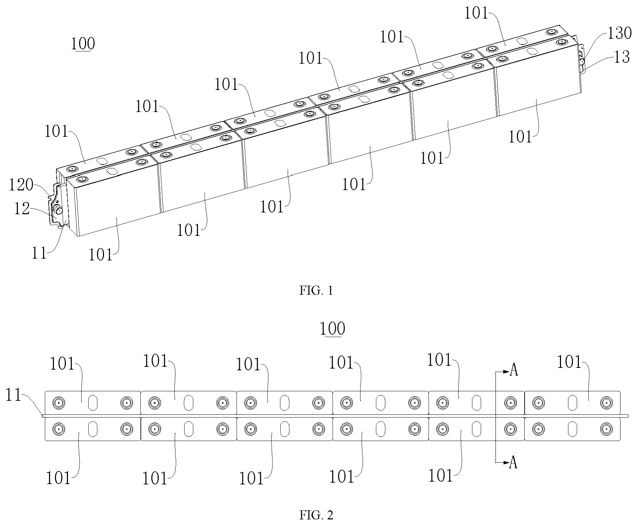

Based on the above considerations, to enable the cooling structure to meet different swelling demands of different regions of the battery and to allow different regions of the battery to swell adaptively according to changes in internal stress so as to maintain the normal service life or extend the service life of the battery, a cooling structure is provided. Referring to FIG. 1 to FIG. 3, the cooling structure 10 includes a side plate 111 and a cooling channel 113 disposed on at least one side of the side plate 111. The side plate 111 is configured to be deformable toward the side where the cooling channel 113 is located, producing a deformable amount, where the deformable amount varies at different positions of the side plate 111.

In the provided cooling structure 10, at least one side of the side plate 111 is provided with a cooling channel 113 through which a cooling medium can flow, and the side plate 111 and the battery 100 are in contact with each other to allow the cooling medium to take away heat from the battery 100. The side plate 111 is deformable toward the side where the cooling channel 113 is located, producing a deformable amount, where the deformable amount varies at different regions of the side plate 111. Different regions of the battery 100 in contact with the side plate 111 exhibit different degrees of swelling, and the different degrees of swelling exert different magnitudes of resistance force on different regions of the side plate 111. The varying deformable amounts at different regions of the side plate 111 provide swelling spaces required for different degrees of swelling, allowing different regions of the battery 100 to swell adaptively according to changes in internal stress, thereby maintaining the normal service life or extending the service life of the battery 100.

Referring to FIG. 1 to FIG. 3, the battery 100 provided in the embodiments of this application can be used in but not limited to electric apparatuses 1000 such as vehicles, ships, or aircraft. The battery 100 including the cooling structure 10 provided in the embodiments of this application can be used to form a power supply system of the electric apparatus 1000, helping to maintain or extend the service life of the battery 100 and the electric apparatus 1000, as well as improving the safety and reliability during use of the battery 100 and the electric apparatus 1000.

In some embodiments, the battery 100 refers to a physical module including one or more battery cells 101 to provide voltage and capacity. For example, the battery 100 may include a battery cell 101, a battery 100 module, or a battery 100 pack. Generally, the battery 100 includes a single battery 100 and a box for accommodating the single battery 100, where the box is configured to accommodate and encapsulate one or more battery cells 101 or battery 100 modules, and the box is configured to protect the battery cell 101 and prevent liquids or other foreign objects from affecting the charging or discharging of the battery cell 101.

The battery cell 101 may be a lithium-ion secondary battery, a lithium-ion primary battery, a lithium-sulfur battery, a sodium-lithium-ion battery, a sodium-ion battery, a magnesium-ion battery, or the like. This is also not limited in the embodiments of this application. The battery cell 101 may be cylindrical, flat, cuboid, or of other shapes, which is also not limited in the embodiments of this application. Battery cells 101 are classified into three types based on encapsulation methods: cylindrical battery cells, prismatic battery cells, and pouch battery cells. This is also not limited in the embodiments of this application.

The battery cell 101 refers to the smallest unit constituting the battery 100. In the battery 100, there may be multiple battery cells 101, and the multiple battery cells 101 may be connected in series, in parallel, or in series-parallel, where being connected in series-parallel refers to a combination of a series connection and a parallel connection of the multiple battery cells 101. The multiple battery cells 101 may be directly connected in series, in parallel, or in series-parallel, and then an entirety formed by the multiple battery cells 101 is accommodated in a box. Certainly, the battery 100 may alternatively formed in a manner that multiple battery cells 101 are first connected in series, in parallel, or in series-parallel to form a battery 100 module, and then multiple battery 100 modules are connected in series, in parallel, or in series-parallel to form an entirety that is accommodated in a box.

The electric apparatus provided in the embodiments of this application may include, but is not limited to, mobile phones, tablets, laptops, electric toys, electric tools, electric bicycles, electric vehicles, ships, and spacecraft. Electric toys may include fixed or mobile electric toys, such as gaming consoles, electric toy cars, electric toy ships, and electric toy airplanes. Spacecraft may include airplanes, rockets, space shuttles, spaceships, and the like.

The vehicle may be a fuel-powered vehicle, a gas-powered vehicle, or a new energy vehicle, where the new energy vehicle may be a battery electric vehicle, a hybrid electric vehicle, or an extended-range vehicle. A battery 100 is provided inside the vehicle, and the battery 100 may be disposed at the bottom, front, or rear of the vehicle. The battery 100 may be configured to supply power to the vehicle, for example, the battery 100 may be used as an operational power source for the vehicle.

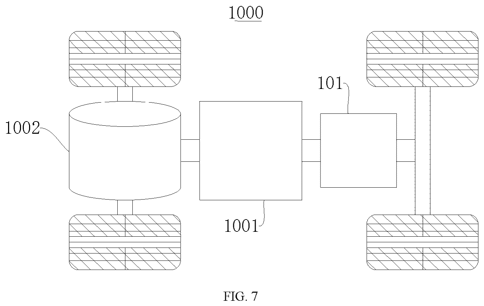

As shown in FIG. 7, the vehicle may further include a controller 1001 and a motor 1002, where the controller 1001 is configured to control the battery 100 to supply power to the motor 1002, for example, for the operational power demands of the vehicle during starting, navigation, and driving. In some embodiments, the battery 100 can serve not only as an operational power source for the vehicle but also as a driving power source for the vehicle, replacing or partially replacing fuel or natural gas to provide driving power for the vehicle.

The cooling structure 10, battery 100, and electric apparatus 1000 provided in the embodiments of this application are described below.

Referring to FIG. 1 to FIG. 6, an embodiment of this application provides a cooling structure 10. The cooling structure 10 includes a side plate 111 and a cooling channel 113 disposed on at least one side of the side plate 111. The side plate 111 is configured to be deformable toward the side where the cooling channel 113 is located, producing a deformable amount, where the deformable amount varies at different positions of the side plate 111.

Cooling refers to a process of reducing the temperature of a heat-generating object by dissipating the heat of the heat-generating object, and the cooling structure 10 refers to a structure capable of implementing a cooling process, such as a cooling plate.

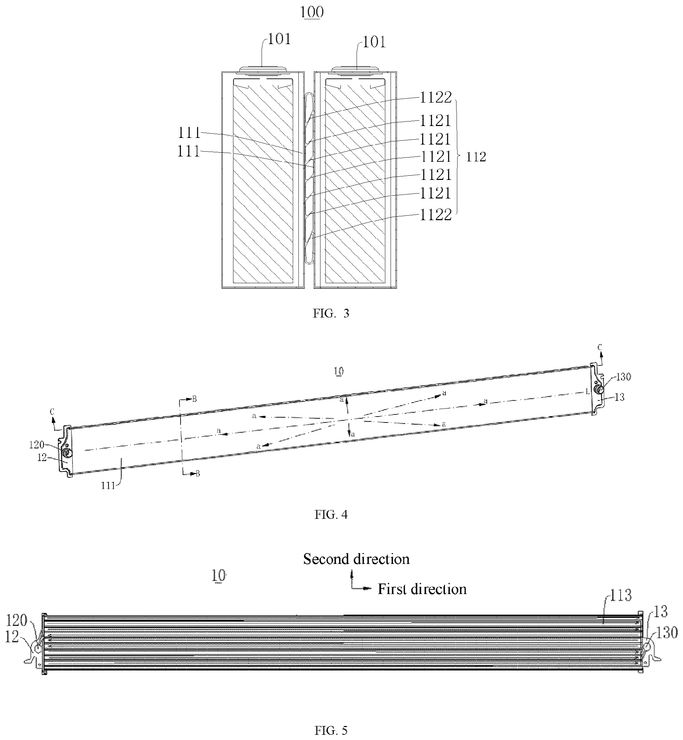

Referring to FIG. 4 and FIG. 5, generally, the cooling structure 10 includes a cooling body 11, a liquid inlet structure 12, and a liquid outlet structure 13. The cooling body 11 is internally provided with a cooling channel 113, the liquid inlet structure 12 is provided with a liquid inlet 120, and the outlet structure 13 is provided with a liquid outlet 130, where the liquid inlet 120 and the liquid outlet 130 are respectively in communication with the cooling channel 113. An outer surface of a cooled component is in contact with an outer surface of the cooling body 11. A low-temperature cooling medium enters the cooling channel 113 through the liquid inlet 120, the cooling medium and the cooled component are respectively in contact with inner and outer surfaces of the cooling body 11 to implement heat exchange, the heat from the cooled component increases the temperature of the low-temperature cooling medium, and the high-temperature cooling medium flows out of the cooling channel 113 through the liquid outlet 130, carrying away the heat of the cooled component.

The side plate 111 refers to a plate structure constituting at least part of the contour of the cooling body 11.

In some embodiments, one side of the side plate 111 is provided with a cooling channel 113, making the side plate 111 serve as a constituent part of a channel wall of the cooling channel 113, the other side of the side plate 111 facing away from the side is in contact with the cooled component, and the side plate 111 serves as a transfer medium for heat exchange between the cooling medium and the cooled component. On one side surface, that is, a side surface of the side plate facing the cooled component, the side plate has varying deformable amounts.

In some other embodiments, two sides of the side plate 111 are both provided with the cooling channels 113, making the side plate 111 serve as a part of the channel walls of the cooling channels 113 on the two sides, and the two sides of the side plate 111 can both be in contact with the cooled component. The side plate 111 serves as a transfer medium for heat exchange between the cooling medium and the cooled component.

On two side surfaces, that are, side surfaces of two sides of the cooled component facing the middle side plate, the side plate has varying deformable amounts on the two sides. Due to the presence of the cooling channels on the two sides, the two sides can both provide space for deformable amounts. Therefore, in two directions along a same line, the side plate can have deformable amounts in opposite directions, and the cooling channels absorb this part of deformation.

Generally, the cooling body 11 is an integrally formed structure, and the side plate 111 is integrally connected to other parts of the cooling body 11, forming a part of an overall contour structure of the cooling body 11. Generally, the side plate 111 may refer to a side plate structure with a largest area on the cooling body 11.

Generally, the cooling body 11 includes one or more side plates 111 with the largest area, where the side plate 111 has a specific extension area and thickness, with a large ratio of the extension area to the thickness. A larger extension area is conducive to increasing a contact area between the cooling body 11 and the cooled component, helping to improve the cooling efficiency. A smaller thickness facilitates rapid heat exchange between the low-temperature cooling medium and the high-temperature cooled component, helping to improve the cooling efficiency.

Integral formation refers to a process of forming a predetermined shape through deformation or extension of a material body or removing a part of the material body to remain a predetermined shape, including but not limited to extension of a same material or sequential extension of different materials, which includes but is not limited to a process of stamping a blank material with a stamping machine to deform the blank material to ultimately form a predetermined shape, or a process of forging a blank material with a forging tool to deform the blank material to ultimately form a predetermined shape, or a process of removing a part of a blank material with a cutting device and remaining the parts with a predetermined shape, or a process of casting a liquid material into a casting cavity adapted to the shape of a component and then performing cooling to obtain the component.

The process of casting a liquid material into a casting cavity adapted to the shape of a component to obtain the component may involve obtaining a complete component in a cavity, where one or more materials can be cast in this cavity. Alternatively, it may involve obtaining a part of the component in one cavity, and transferring this part of the component to another cavity to obtain another part of the component. In this way, different parts of the complete component can be formed sequentially in different cavities, where the materials of different parts of the complete component may be the same or different.

Referring to FIG. 5, the cooling channel 113 refers to a channel structure disposed inside the cooling body 11, with a specific extension length and cross-sectional size. The specific extension length is conducive to extending a flow time of the cooling medium in the cooling channel 113, helping to fully utilize the cooling capacity of the cooling medium. The specific cross-sectional size is conductive to measuring the throughput of the cooling medium per unit time, helping to maximize the cooling capacity of the cooling medium.

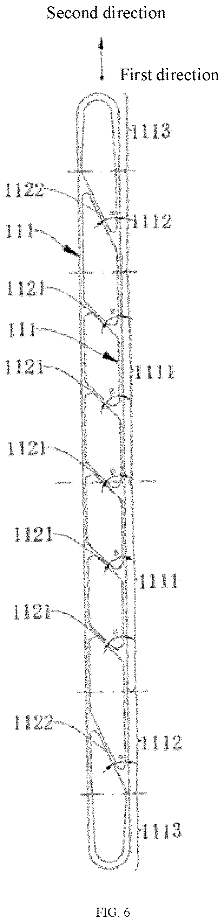

Referring to FIG. 5 and FIG. 6, the side plate 111 serves as a transfer part for heat exchange. One side of the side plate 111 is provided with a cooling channel 113, making the side plate 111 serve as a part of a channel wall of the cooling channel 113. Generally, the cooling body 11 is provided with multiple cooling channels 113, where the multiple cooling channels 113 each occupy a part of the side plate 111, and the cooling mediums in the multiple cooling channels 113 respectively exchange heat with the cooled component via respective parts of the side plate 111.

Deformation refers to a process in which relative positions of material particles in a structure change under force, which ultimately alters an appearance of the structure. Deformable amount refers to a variation amount of a change in the appearance of the structure along a predetermined direction due to a directed external force. Generally, deformation refers to regional deformation caused by shape changes at multiple points of a structure, and deformable amount refers to a variation amount of deformation of some regions of a structure that is measured based on a regional change.

Generally, known deformation measurement techniques can be used to quantify and measure the deformation of a solid structure. Deformation measurement techniques involve measuring the deformation of a structure object to understand various elements and situations such as direction, magnitude, spatial distribution, and changes with time of the deformation of the structure object and to make accurate analysis and prediction.

Generally, deformation measurement techniques are broadly divided into two categories: one involves obtaining appearance information of a deformed region and deriving deformation data through analysis or calculation of the appearance information, and the other involves obtaining internal stress information or pressure load of the deformed region and deriving deformation data through analysis or calculation of the internal stress information or pressure load.

For example, some conventional measurement methods can be used for deformation measurement, and these conventional measurement methods are generally based on geometry, involving obtaining specific geometric parameters with instruments and calculating the required deformation trend or deformation amount using geometric principles, including but not limited to precision leveling methods using optical or electronic level gauges, triangulation height measurement methods using electromagnetic wave rangefinders, triangulation side measurement methods, polygonmetric methods, and deformation cross methods.

Some image processing-based measurement methods can alternatively be used, including but not limited to digital photogrammetry measurement methods and real-time photogrammetry measurement methods. Information of photographic images obtained through digital photography or real-time photography is substantial and accurate, and based on comprehensive and precise photographic information and high utilization of such information, a deformation process and a corresponding deformable amount can be quickly obtained. Since high-precision deformation information can be obtained based on the photographic information, a deformable amount at any point can be precisely determined using a photogrammetry measurement method, which is suitable for measuring local deformation information within a small measurement range.

Some special measurement methods can alternatively be used for deformation measurement, including but not limited to collimation measurement methods performed using laser collimators, deflection curve measurement methods performed using inclinometers, and micro-distance precision measurement methods performed using Invar wire ruler rangefinders. These special measurement methods can achieve automatic monitoring and remote monitoring with relatively high measurement accuracy and efficiency, which are suitable for measuring local deformation information within a small measurement range.

Deformation data can alternatively be obtained using microsensor arrays and then the deformation data is analyzed to obtain deformation, where the microsensor arrays include but are not limited to displacement sensor arrays, acceleration sensor arrays, and fiber grating strain sensor arrays, where the fiber grating strain sensor arrays include but are not limited to fiber grating strain sensor arrays and/or fiber grating temperature sensor arrays.

Equivalent stiffness methods can alternatively be used to calculate bending deformation and stress changes of a plate structure; pressure load can be obtained and corresponding bending deformation and stress changes can be analyzed using force sensor arrays or piezoelectric ceramics; and displacement deformation of a structure can be measured based on lateral cascading target measurement methods.

The deformation measurement methods listed above are all known techniques, and only some of the known deformation measurement methods are listed. It should be noted that any measurement method capable of obtaining deformation data of deformation of a body or surface of a plate structure in different regions is applicable to the deformation measurement of the side plate 111 of the cooling structure 10 in the embodiments of this application.

Moreover, the deformation measurement of the side plate 111 of the cooling structure 10 in the embodiments of this application may involve performing specific numerical measurement of deformation in different regions and analyzing specific numerical values to obtain a variation trend, ensuring that the variation trend matches a swelling trend of the corresponding cooled component. The specific numerical measurement includes but is not limited to numerical measurement for continuous dense sites or numerical measurement for multiple pole sites.

Alternatively, the deformation measurement of the side plate 111 of the cooling structure 10 in the embodiments of this application may involve directly obtaining the variation trend of an entire deformed region, ensuring that the variation trend matches the swelling trend of the corresponding cooled component, including but not limited to obtaining a visualization trend of the entire deformed region by using image processing techniques or simulation generation techniques.

In the cooling structure 10 provided in the embodiments of this application, at least one side of the side plate 111 is provided with a cooling channel 113 for allowing a cooling medium to flow through, and the cooled component and the side plate 111 are in contact with each other to allow the cooling medium to take away heat from the cooled component.

The side plate 111 is deformable toward the side where the cooling channel 113 is located, producing a deformable amount, where the deformable amount varies at different positions of the side plate 111. A side surface of the cooled component in contact with the side plate 111 exhibits different degrees of swelling, and the different degrees of swelling exert different magnitudes of resistance force on different regions of the side plate 111. The varying deformable amounts at different regions of the side plate 111 provide swelling spaces required for the different degrees of swelling, allowing the cooled component to swell differently according to internal stress, thereby maintaining the normal service life or extending the service life of the cooled component.

In some embodiments, one side of the side plate 111 of the cooling structure 10 is provided with a cooling channel 113 for allowing a cooling medium to flow through, and the other side of the side plate 111 is configured to be in contact with the cooled component, allowing the cooling medium to take away heat from the cooled component through contact.

The side plate 111 is deformable toward the side where the cooling channel 113 is located, producing a deformable amount, where the deformable amount varies at different regions of the side plate 111. Different regions of the cooled component in contact with the side plate 111 exhibit different degrees of swelling, and the different degrees of swelling exert different magnitudes of resistance force on different regions of the side plate 111. The varying deformable amounts at different regions of the side plate 111 provide swelling spaces required for the different degrees of swelling, allowing different regions of the cooled component to swell adaptively according to changes in internal stress, thereby maintaining the normal service life or extending the service life of the cooled component.

In some embodiments, from the central region of the side plate 111 to the edge region of the side plate 111, the deformable amount of the side plate 111 decreases.

The central region of the side plate 111 refers to a plate body region located at the center of the side plate 111, and the edge region of the side plate 111 refers to a plate body region located on an outer side of the central region and forming the contour of the side plate 111.

For example, referring to FIG. 5, the edge region may be disposed on two sides of the central region along a first direction, and/or the edge region may be disposed on two sides of the central region along a second direction, where the first direction is perpendicular to the second direction.

As shown in FIG. 4, a direction a from the central region to the edge region of the side plate 111 is illustrated, where the direction a may be any direction diverging from the central region toward the edge region.

In some embodiments, in the first direction or the second direction, from the central region to the edge region, the deformable amount of the side plate 111 exhibits a decreasing trend.

Generally, to improve the cooling efficiency, an entire plate surface region of the side plate 111 is in contact with the cooled component, maximizing the utilization of the area of the side plate 111 to increase the cooling capacity.

Further, when the cooling body 11 and the cooled component are arranged in a one-to-one correspondence, they are in contact with each other in a manner that the cooled component covers the side plate 111, such that the central region of the side plate 111 is in contact with the central region of the surface of the cooled component, and the edge region of the side plate 111 is located on an inner side of the edge of the surface or flush with the edge of the surface.

Alternatively, when the cooling body 11 is arranged in a one-to-many manner, that is, when one cooling body 11 correspondingly cools multiple cooled components, the surfaces of the multiple cooled components on the same side are in contact with the side plate 111, the multiple cooled components may be arranged in any array, and the edge region of the side plate 111 is located on an inner side of the edge of the surface at the same side as the array or flush with the edge of the surface.

For example, multiple cooled components are arranged sequentially along the first direction, and the edge region of the side plate that has a deformable amount difference from the central region may be disposed at least on two sides of the central region of the side plate along the second direction, and located on inner sides of the edges of the multiple cooled components along the second direction.

In some embodiments, in the first direction or the second direction, from the central region to the edge region, the deformable amount of the side plate 111 exhibits a gradient decrease.

The gradient decrease means that the side plate 111 is divided into several different plate portions from the central region to the edge region, each plate portion occupies a specific size in the direction from the central region to the edge region, deformable amounts of the different plate portions decrease sequentially in that direction, and the deformable amounts within different regions of the same plate portion are substantially the same. The sizes occupied by the different plate portions in the direction from the central region to the edge region may be the same or different, allowing different-sized regions of the cooled component to undergo different degrees of swelling.

It should be noted that, in the direction from the central region of the side plate 111 to the edge region of the side plate 111, the sizes occupied by the different plate portions do not necessarily correlate with the deformable amounts they can provide. A plate portion occupies a large size in the direction from the central region of the side plate 111 to the edge region of the side plate 111, but can provide a small deformable amount. Alternatively, a plate portion occupies a small size in the direction from the central region of the side plate 111 to the edge region of the side plate 111, but can provide a large deformable amount.

Certainly, in some other embodiments, from the central region of the side plate 111 to the edge region of the side plate 111, the deformable amount of the side plate 111 may continuously and gradually decrease, which can adapt to the case in which the degree of swelling of the cooled component continuously and gradually decreases from the central region to the edge region of the side plate.

Generally, in a practical situation, taking a prismatic battery cell 101 as an example, a largest surface thereon is in contact with a largest side surface of the cooling body 11. A central region of this largest surface exhibits the largest degree of swelling, with the degree of swelling generally decreasing from the central region to the edge region in a relatively smooth trend without significant sudden changes. Thus, the swelling trend can be understood as being formed by different continuous swelling in multiple different regions, where the swelling of the multiple different regions varies in a manner of approximately decreasing from the central region to the edge region.

During the design of the side plate 111, to adapt to the swelling variation pattern of multiple different regions, the deformable amount of the side plate 111 is set to exhibit a gradient decrease, to be specific, the deformable amounts of different plate portions are designed in a regular manner. In the direction from the central region to the edge region, the sizes occupied by different plate portions on the side plate can consistently align with the swelling trend of the cooled component corresponding to the sizes occupied by different regions of the cooled component.

Generally, the central region of the surface of the cooled component exhibits the largest degree of swelling, and the degree of swelling exhibits a decreasing trend from the central region to the edge region. To adapt to the swelling variation trend of the surface of the cooled component, the deformable amount of the side plate 111 is configured to exhibit a gradient decrease from the central region to the edge region, aligning the variation trend of the deformable amount with the swelling variation trend of the cooled component, thereby allowing the side plate 111 to further meet the swelling demands of the cooled component.

Referring to FIG. 4 and FIG. 6, in some embodiments, the side plate 111 includes a first deformation portion 1111, a second deformation portion 1112, and a third deformation portion 1113 sequentially arranged from the central region of the side plate 111 to the edge region of the side plate 111. A deformable amount of the first deformation portion 1111 is greater than or equal to a deformable amount of the second deformation portion 1112, and the deformable amount of the second deformation portion 1112 is greater than a deformable amount of the third deformation portion 1113.

The first deformation portion 1111 refers to a plate portion located in the central region of the side plate 111, occupying a specific area in the central region of the side plate 111. Ideally, when the side plate 111 has a geometric center, it is best to make a geometric center of the first deformation portion 1111 overlap with the geometric center of the side plate 111.

The third deformation portion 1113 refers to a plate portion in the edge region of the side plate 111, which can be understood as a part forming the contour of the side plate 111. The third deformation portion 1113 is configured to withstand resistance from the cooled component as well as to prevent the contour shape of the side plate 111 from being significantly altered by the cooled component.

The second deformation portion 1112 refers to a plate portion disposed between the first deformation portion 1111 and the second deformation portion 1112. In the direction from the central region to the edge region, the first deformation portion 1111, the second deformation portion 1112, and the third deformation portion 1113 each occupy a specific size, and the sizes occupied by different deformation portions may be the same or different.

For example, generally, when a centerline L of the side plate 111 extending along the first direction is taken as a boundary, and one side of the centerline L is used as an example, the first deformation portion 1111, the second deformation portion 1112, and the third deformation portion 1113 are sequentially away from the centerline in a direction perpendicular to the centerline L. The size occupied by the first deformation portion 1111 is larger than that occupied by the second deformation portion 1112 and also larger than that occupied by the third deformation portion 1113, while the size occupied by the second deformation portion 1112 is substantially equal to that occupied by the third deformation portion 1113.

In some embodiments, as shown in FIG. 4, the side plate 111 may be substantially symmetrical on two sides of the centerline L. Especially when one side plate 111 correspond to multiple cooled components, the multiple cooled components are arranged sequentially along the centerline L, the first deformation portion 1111, the second deformation portion 1112, and the third deformation portion 1113 provide deformation spaces for the cooled components in a direction perpendicular to the centerline, not only meeting the cooling demands of the multiple cooled components, but also meeting the swelling demands of the multiple cooled components. Certainly, within the sizes occupied by the deformation portions, the deformable amounts are substantially consistent, resulting in an overall gradient decrease trend.

Generally, in some embodiments, the cooling structure 10 includes a central region and an edge region, and in a direction perpendicular to the centerline L, the size occupied by the edge region is substantially equal to that occupied by the central region, with a significant deformable amount difference therebetween. The central region of the side plate 111 matches the central region of the cooled component, providing an adaptive deformable space for swelling of the cooled component. The edge region of the side plate 111 withstands resistance from the cooled component as well as prevents the contour shape of the side plate 111 from being significantly altered by the cooled component.

As compared to a solution in which the deformable amount of the entire plate body of the side plate 111 is configured to be uniform, a significant deformable amount difference between the central region and the edge region can meet the swelling demands of the cooled component to some extent.

Based on the previous embodiment, to make the side plate 111 more precisely adapt to the swelling demands of the cooled component, a portion of the edge region close to the central region (that is, the second deformation portion 1112) in the previous embodiment is designed to be softer; to be specific, as compared to a portion far away from the central region (that is, the third deformation portion 1113), the deformable amount of the part close to the central region is increased to provide a larger deformable space, but is still less than or equal to the deformable amount that can be provided by the central region (that is, the first deformation portion 1111), or is the same as the deformable amount of the central region.

As compared to the previous embodiment, the second deformation portion 1112 is additionally provided between the first deformation portion 1111 and the third deformation portion 1113, which increases the deformable amount between the first deformation portion 1111 and the third deformation portion 1113, making the side plate 111 more adaptive to the swelling demands of the cooled component, thereby further maintaining or extending the service life of the cooled component.

Similarly, in one embodiment, a design area of the deformable amount of the first deformation portion 1111 is extended, where the extension portion has a deformable amount between the deformable amount of the original first deformation portion 1111 and the deformable amount of the original third deformation portion 1113, making the side plate 111 more adaptive to the swelling demands of the cooled component.

The side plate 111 is divided into multiple different plate portions from the central region to the edge region, and the deformable amounts of the different portions are differentiated and compared to achieve a gradient variation, achieving a more precise variation in deformable amount, thereby making the side plate more adaptive to the swelling demands of the cooled component.

In some embodiments, the side plate 111 includes two second deformation portions 1112 and two third deformation portions 1113. The two second deformation portions 1112 are disposed on two opposite sides of the first deformation portion 1111, and the two third deformation portions 1113 are disposed on two sides of the two second deformation portions 1112 facing away from the first deformation portion 1111.

Considering that the central region has edge regions on any two opposite sides, and the second deformation portions 1112 and third deformation portions 1113 are disposed on both the two opposite sides of the first deformation portion 1111, the swelling demands of the cooled component are met across the entire contact region between the side plate 111 and the cooled component.

For example, when the cooling body 11 and the cooled component are arranged in a one-to-one correspondence in quantity, the two second deformation portions 1112 are disposed on two sides of the first deformation portion 1111 along the first direction, and the two third deformation portions 1113 are disposed on two sides of the two second deformation portions 1112 facing away from the first deformation portion 1111 along the first direction. Alternatively, the two second deformation portions 1112 are disposed on two sides of the first deformation portion 1111 along the second direction, and the two third deformation portions 1113 are disposed on two sides of the two second deformation portions 1112 facing away from the first deformation portion 1111 along the second direction. Alternatively, the first deformation portion 1111 is surrounded by the second deformation portions 1112 arranged on the two sides along the first and second directions, and the second deformation portions 1112 are surrounded by the third deformation portions 1113 arranged at the peripheries.

For example, when the cooling body 11 and the cooled components are arranged in a one-to-many correspondence, the multiple cooled components are disposed along the first direction, the two second deformation portions 1112 are disposed on two sides of the first deformation portion 1111 along the second direction, and the two third deformation portions 1113 are disposed on two sides of the two second deformation portions 1112 facing away from the first deformation portion 1111 along the second direction.

In some embodiments, the cooling structure 10 includes two side plates 111 disposed, and the two side plates 111 are disposed opposite each other, with the cooling channel 113 disposed between the two side plates 111.

The two side plates 111 are both deformable toward the sides where they are located, and the cooled components can be disposed on both the sides of the two side plates 111 facing away from each other. The cooled components on the two sides are cooled via the cooling channel 113 between the two side plates 111, increasing the integration degree while meeting the swelling demands of the cooled components.

In some embodiments, the cooling structure 10 includes multiple partition plates 112 disposed between the two side plates 111. The partition plates 112 extend along the first direction, the multiple partition plates 112 are spaced apart along the second direction, and two adjacent partition plates 112 and the two side plates 111 enclose the cooling channel 113 extending along the first direction. In the second direction, from the central region to the edge region of the side plate 111, the deformable amount of the side plate 111 exhibits a gradient decrease.

The partition plate 112 refers to a plate structure with a large ratio of an extension area to a thickness and a large ratio of a length dimension to a width dimension, where the extension area is the area enclosed by the length dimension and the width dimension.

Generally, the partition plates 112 are integrally formed with the side plates 111. A plate thickness of the partition plate 112, a connection angle between the partition plate 112 and the side plate 111, and a spacing between adjacent partition plates 112 can all be used as design parameters for the deformable amount of the side plate 111. By altering these parameters, the deformable amount of the side plate 111 can be altered. Different plate portions of the side plate 111 along the second direction can exhibit varying deformable amounts based on variations in these parameters, thereby forming a deformable amount variation trend consistent with the swelling trend of the cooled component.

The multiple partition plates 112 are spaced apart along the second direction, and the deformable amount of the side plate 111 exhibits a variation trend in the second direction. This configuration is more conducive to achieving varying deformable amounts using the multiple partition plates 112, as compared to the configuration in which the deformable amount of the side plate 111 has a variation trend in the first direction.

If an extension direction of the cooling channel 113 and a direction of the variation trend of the deformable amount of the side plate 111 are both in the first direction, it is inevitable to increase the design difficulty of the cooling body 11. Therefore, to not only meet the cooling requirements of the multiple cooled components but also provide corresponding deformation spaces according to the swelling demands of the cooled components, the cooling channel 113 extends along the first direction, and the deformable amount of the side plate 111 varies along the second direction, thereby not only meeting different demands from different directions, but also reducing the design difficulty of the cooling body 11.

In some embodiments, in the second direction, from the central region to the edge region of the side plate 111, the side plate 111 includes a first deformation portion 1111, a second deformation portion 1112, and a third deformation portion 1113. A deformable amount of the first deformation portion 1111 is greater than a deformable amount of the second deformation portion 1112, and the deformable amount of the second deformation portion 1112 is greater than a deformable amount of the third deformation portion 1113.

Unlike in the first direction, dividing the side plate 111 into multiple different plate portions from the central region to the edge region in the second direction and differentiating and comparing the deformable amounts of the three different deformation portions to achieve a gradient variation results in a more precise variation in deformable amount, thereby making the side plate more adaptive to the swelling demands of the cooled component in the second direction.

In some embodiments, the partition plates 112 include a first partition plate 1121 connected to the first deformation portion 1111 at an angle and a second partition plate 1122 connected to the second deformation portion 1112 at an acute angle, where the acute angle α between the second partition plate 1122 and the second deformation portion 1112 is smaller than the angle β between the first partition plate 1121 and the first deformation portion 1111.

Generally, from the edge region to the central region of the side plate 111, the deformation resistance of the side plate 111 exhibits a decrease trend. The edge region has higher deformation resistance, helping to maintain the contour shape of the cooling structure 10; while the central region has relatively lower deformation resistance, helping to withstand resistance of the central region of the cooled component that exhibits the largest degree of swelling, and providing a corresponding deformation.

Generally, the third deformation portion 1113 has the highest deformation resistance, and the structures of the second deformation portion 1112 and the first deformation portion 1111 are substantially similar. Since the second deformation portion 1112 is close to the third deformation portion 1113, the third deformation portion 1113 enhances the deformation resistance of the second deformation portion 1112. Therefore, even though the structures of the second deformation portion 1112 and the first deformation portion 1111 are substantially similar, the deformation resistance of the second deformation portion 1112 is significantly higher than that of the first deformation portion 1111 due to an assisting and reinforcing effect of the third deformation portion 1113.

To relatively reduce the deformation resistance of the second deformation portion 1112, the deformable amount of the second deformation portion 1112 is increased to meet the swelling demands of a local region of the corresponding cooled component, but the deformation resistance is still lower than that of the third deformation portion 1113 and higher than that of the first deformation portion 1111, and the angle between the second partition plate 1122 and the second deformation portion 1112 is set to an acute angle, so that the acute angle formed between the second partition plate 1122 and the second deformation portion 1112 is smaller than the angle formed between the first partition plate 1121 and the first deformation portion 1111. The deformable amount of the second deformation portion 1112 is increased but remains less than that of the first deformation portion 1111, and the first deformation portion 1111, the second deformation portion 1112, and the third deformation portion 1113 exhibit a gradient decrease, meeting the swelling variation demands of the surface of the cooled component.

In some embodiments, the first partition plate 1121 is connected to the first deformation portion 1111 at an acute angle.

The first partition plate 1121 forms an acute angle or a right angle with the first deformation portion 1111, where a smaller angle is more conducive to increasing the deformable amount. Compared to a right angle, an acute angle formed between the first partition plate 1121 and the first deformation portion 1111 is more conducive to increasing the deformable amount of the first deformation portion 1111, so as to satisfy the resistance from the central region of the cooled component that exhibits the largest degree of swelling and provide a corresponding deformation.

In some embodiments, one or more second partition plates 1122 are provided, and multiple first partition plates 1121 are provided. A spacing between two adjacent second partition plates 1122 is greater than a spacing between two adjacent first partition plates 1121, and/or a spacing between a second partition plate 1122 and a first partition plate 1121 that are adjacent to each other is greater than the spacing between two adjacent first partition plates 1121.

In some embodiments, multiple first partition plates 1121 are provided, and one second partition plate 1122 is provided, where a spacing between the second partition plate 1122 and the first partition plate 1121 that are adjacent to each other is greater than a spacing between two adjacent first partition plates 1121.

In some other embodiments, multiple first partition plates 1121 are provided, and multiple second partition plates 1122 are provided. In some implementations, a spacing between two adjacent second partition plates 1122 is greater than a spacing between two adjacent first partition plates 1121, and a spacing between a second partition plate 1122 and a first partition plate 1121 that are adjacent to each other is greater than the spacing between two adjacent first partition plates 1121.

In some other implementations, the spacing between two adjacent second partition plates 1122 is greater than the spacing between two adjacent first partition plates 1121, and the spacing between a second partition plate 1122 and a first partition plate 1121 that are adjacent to each other is equal to the spacing between two adjacent first partition plates 1121.

In some other implementations, the spacing between two adjacent second partition plates 1122 is equal to the spacing between two adjacent first partition plates 1121, and the spacing between a second partition plate 1122 and a first partition plate 1121 that are adjacent to each other is greater than the spacing between two adjacent first partition plates 1121.

The spacing between the partition plates 112 affects the deformable amounts of the deformation portions, where a larger spacing is more conducive to increasing the deformable amount. Through the above embodiments, adjusting the spacing between the partition plates can provide a larger deformable amount, meeting higher swelling demands of the cooled components.

Generally, the third deformation portion 1113 has the highest deformation resistance, followed by the second deformation portion 1112, with the first deformation portion 1111 having the lowest deformation resistance. Through the above solutions, the deformation resistance of the third deformation portion 1113 and the second deformation portion 1112 can be correspondingly and appropriately reduced, that is, the deformability is enhanced. To be specific, the deformability of the third deformation portion 1113 and the second deformation portion 1112 is approximately enhanced while the highest deformability of the third deformation portion 1113 is maintained.

In some cases, the angle between the partition plate 112 and the side plate 111 is improved, but solely improving the angle between the partition plate 112 and the deformation portion is insufficient to provide a sufficient deformable space for a cooled component with higher swelling variation demands. Therefore, in addition to the improvement of the angle between the partition plate 112 and the deformation portion, improvement of the spacing between the partition plates is additionally provided to fully adjust the overall deformable amount of the side plate 111.

The partition plates 112 include one or more second partition plates 1122 connected to the second deformation portion 1112 and multiple first partition plates 1121 connected to the first deformation portion 1111. A spacing between two adjacent second partition plates 1122 is greater than a spacing between two adjacent first partition plates 1121, and/or a spacing between a second partition plate 1122 and a first partition plate 1121 that are adjacent to each other is greater than the spacing between two adjacent first partition plates 1121.

Generally, the spacing between any two adjacent second partition plates 1122 is consistent, and the spacing between any two adjacent first partition plates 1121 is consistent.

In some embodiments, multiple first partition plates 1121 are provided, and one second partition plate 1122 is provided, where a spacing between the second partition plate 1122 and the first partition plate 1121 that are adjacent to each other is greater than a spacing between two adjacent first partition plates 1121.

In some other embodiments, multiple first partition plates 1121 are provided, and multiple second partition plates 1122 are provided. In some implementations, a spacing between two adjacent second partition plates 1122 is greater than a spacing between two adjacent first partition plates 1121, and a spacing between a second partition plate 1122 and a first partition plate 1121 that are adjacent to each other is greater than the spacing between two adjacent first partition plates 1121.

In some other implementations, the spacing between two adjacent second partition plates 1122 is greater than the spacing between two adjacent first partition plates 1121, and the spacing between an adjacent second partition plate 1122 and first partition plate 1121 is equal to the spacing between two adjacent first partition plates 1121.

In some other implementations, a spacing between two adjacent second partition plates 1122 is equal to a spacing between two adjacent first partition plates 1121, and a spacing between a second partition plate 1122 and a first partition plate 1121 that are adjacent to each other is greater than the spacing between two adjacent first partition plates 1121.

To relatively reduce the deformation resistance of the second deformation portion 1112, the deformable amount of the second deformation portion 1112 is increased to meet the swelling demands of a local region of the corresponding cooled component, but the deformation resistance is still lower than that of the third deformation portion 1113 and higher than that of the first deformation portion 1111; and the spacing between two adjacent second partition plates 1122 and/or the spacing between an adjacent second partition plate 1122 and a first partition plate 1121 that are adjacent to each other is set to a large spacing, while the spacing between two adjacent first partition plates 1121 is set to a small spacing. A larger spacing is more conducive to increasing the deformable amount. The deformable amount of the second deformation portion 1112 is increased but remains less than that of the first deformation portion 1111, so that the first deformation portion 1111, the second deformation portion 1112, and the third deformation portion 1113 decrease, meeting the swelling variation demands of the surface of the cooled component.

In some embodiments, the second partition plate 1122 is connected to the second deformation portion 1112 at an angle, the first partition plate 1121 is connected to the first deformation portion 1111 at an angle, and the angle α between the second partition plate 1122 and the second deformation portion 1112 is less than or equal to the angle β between the first partition plate 1121 and the first deformation portion 1111.

For a cooled component with higher swelling variation demands, solely adjusting the spacing between partition plates 112 is sufficient to provide a sufficient deformable space. Therefore, based on improvement of the spacing between the partition plates 112, improvement of the angle between the partition plate 112 and the deformation portion is additionally provided. A smaller angle is more conducive to increasing the deformable amount, thereby providing a larger deformable amount to meet the higher swelling demands of the cooled component. The angle between the first partition plate 1121 and the first deformation portion 1111 and the angle between the second partition plate 1122 and the second deformation portion 1112 may both be acute angles or right angles.

In some embodiments, a plate thickness of the second partition plate 1122 is less than a plate thickness of the first partition plate 1121, and/or the number of the second partition plates 1122 is less than the number of the first partition plates 1121.

For a cooled component with higher swelling demands, adjusting the spacing between partition plates 112 and/or the angle between the partition plate 112 and the deformation portion is sufficient to provide a sufficient deformable space. Therefore, improvement of the plate thickness and/or number of the partition plates 112 is additionally provided. A smaller plate thickness is more conducive to increasing the deformable amount, and a smaller number is more conducive to increasing the deformable amount, thereby providing a larger deformable space to meet the higher swelling demands of the cooled component.

Certainly, the implementation of the previous embodiment must ensure that the cooling body 11 maintains its required strength or stiffness. The partition plates 112, as internal support components of the cooling body 11, have a plate thickness that affects the overall framework of the cooling body 11, ensuring that the cooling body 11 remains substantially stable under the clamping of the cooled component without undergoing unintended deformation.

In some embodiments, in practical design, it is preferable that the plate thickness of the first deformation portion 1111 is the same as plate thickness of the second deformation portion 1112, the plate thickness of the second partition plate 1122 is the same as plate thickness of the first partition plate 1121, and the plate thickness of the third deformation portion 1113 is greater than the plate thickness of the first deformation portion 1111 and the second deformation portion 1112.

The plate thickness of the third deformation portion 1113 being greater than the plate thickness of the first deformation portion 1111 and the second deformation portion 1112 helps to maintain the contour shape of the cooling structure 10. The plate thickness of the first deformation portion 1111 being the same as the plate thickness of the second deformation portion 1112, and the plate thickness of the second partition plate 1122 being the same as the plate thickness of the first partition plate 1121 facilitate adaptive improvement of the angle between the partition plate 112 and the deformation portion and the spacing between the partition plates 112 without being affected by inconsistent plate thicknesses.

In some embodiments, the plate thickness of the third deformation portion 1113 gradually increases in a direction leaving the second deformation portion 1112, and two end portions of the two third deformation portions 1113 of the two side plates 111 far away from the second deformation portion 1112 are hermetically connected.

The two end portions of the two third deformation portions 1113 far away from the second deformation portion 1112 are hermetically connected, which enhances the deformation resistance of the third deformation portions 1113, compensating for the reduction in deformation resistance of the third deformation portions 1113 caused by the acute angle between the second partition plate 1122 and the second deformation portion 1112.

In some embodiments, the cooling structure 10 includes two side plates 111 disposed opposite each other and multiple partition plates 112 disposed between the two side plates 111. The partition plates 112 extend along the first direction, the multiple partition plates 112 are spaced apart along the second direction, and two adjacent partition plates 112 and the two side plates 111 enclose the cooling channel 113 extending along the first direction.

The side plate 111 may be in contact with multiple cooled components arranged along the first direction. In the second direction, from the central region to the edge region of the side plate 111, the side plate 111 includes a first deformation portion 1111, a second deformation portion 1112, and a third deformation portion 1113. A deformable amount of the first deformation portion 1111 is greater than a deformable amount of the second deformation portion 1112, and the deformable amount of the second deformation portion 1112 is greater than a deformable amount of the third deformation portion 1113.

The partition plates 112 include a first partition plate 1121 connected to the first deformation portion 1111 at an acute angle and a second partition plate 1122 connected to the second deformation portion 1112 at an acute angle, where the acute angle between the second partition plate 1122 and the second deformation portion 1112 is smaller than the acute angle between the first partition plate 1121 and the first deformation portion 1111. Multiple first partition plates 1121 are provided, and one second partition plate 1122 is provided, where a spacing between the second partition plate 1122 and the first partition plate 1121 that are adjacent to each other is greater than a spacing between two adjacent first partition plates 1121.

In the cooling structure 10 provided in the embodiments of this application, side surfaces of the side plate 111 and the cooled component in contact with each other are generally planar, for example, the cooled component may be a prismatic battery 100. When the contact surfaces of the side plate 111 and the cooled component in contact with each other are non-planar, for example, when one is slightly concave and the other is slightly convex, a same principle can be used to design a cooling body 11 adapting to the cooling requirements, thereby meeting the cooling demands of the cooled component.

Certainly, the cooled component may alternatively have one planar surface that may be in contact with the side plate 111, with other surfaces being non-planar surfaces. Alternatively, side surfaces of the side plate 111 and the cooled component in contact with each other may be formed by multiple planar surfaces at angles. For example, if the side surface of the cooled component includes two planar surfaces at an angle, the cooling body 11 can be clamped therebetween, and the side surface of the cooling body 11 may alternatively be designed with varying deformable amounts according to the principles of the embodiments of this application.

Furthermore, it should be noted that the deformable amount of the first deformation portion 1111 is greater than that of the second deformation portion 1112, and the deformable amount of the second deformation portion 1112 is greater than or equal to that of the third deformation portion 1113. The side plate 111 can be constructed to achieve this overall deformation trend. The values of the multiple angles α between the multiple first partition plates 1121 and first deformation portions 1111 may be the same or different, and the values of the multiple angles β between the multiple second partition plates 1122 and second deformation portions 1112 may be the same or different.

Referring to FIG. 3 to FIG. 6, another objective of the embodiments of this application is to provide a battery 100, where the battery 100 includes a battery cell 101 and the cooling structure 10 as described above, with at least one side of the side plate 111 being in contact with a side surface of the battery cell 101.

In the battery 100 provided in the embodiments of this application, at least one side of the side plate 111 is provided with a cooling channel 113 for allowing a cooling medium to flow through, and at least one side of the side plate 111 is in contact with the battery cell 101, allowing the cooling medium to take away heat from the battery cell 101 through contact. Different regions of the battery cell 101 in contact with the side plate 111 exhibit different degrees of swelling, and the different degrees of swelling exert different magnitudes of resistance force on different regions of the side plate 111. The varying deformable amounts at different regions of the side plate 111 provide swelling spaces required for the different degrees of swelling, allowing different regions of the battery cell 101 to swell adaptively according to changes in internal stress, thereby maintaining the normal service life or extending the service life of the battery cell 101.

In some embodiments, the battery cell 101 is rectangular, and at least one side of the side plate is in contact with a largest surface of the battery cell 101.

The prismatic shape may be a cube or a rectangular prism, and there may be one or more largest surfaces, all of which can meet the cooling demands of the cooled component by using the side plate 111 provided in the embodiments.

The largest surface of the battery cell 101 exhibits a significant swelling variation trend, with the central region exhibiting the largest degree of swelling, and the degree of swelling exhibits a decrease trend from the central region to the edge region. One side of the side plate 111 is in contact with the largest surface of the battery cell 101, which allows the side plate to be more adaptive to the swelling demands of the largest surface.

In some embodiments, the cooling channel 113 extends along the first direction, the battery 100 includes multiple battery cells 101 arranged sequentially along the first direction, and the largest surfaces of the multiple battery cells 101 are all in contact with a same side of the side plate. In a second direction perpendicular to the first direction, from the central region to the edge region of the side plate 111, the deformable amount of the side plate 111 exhibits a gradient decrease.

An extension direction of the cooling channel 113 aligns with an arrangement direction of the multiple battery cells 101, enabling the cooling structure 10 to efficiently cool the multiple battery cells 101. In the second direction, the side plate 111 is configured to exhibit a gradient decrease in deformable amount from the central region to the edge region, thereby meeting the swelling demands of the largest surface of each battery cell 101 arranged along the first direction.

Referring to FIG. 7, another objective of the embodiments of this application is to provide an electric apparatus 1000, where the electric apparatus 1000 includes the battery 100 as described above.

The electric apparatus 1000 provided in the embodiments of this application employs the battery 100 provided by the embodiments of this application, and the battery 100 provided in the embodiments of this application employs the cooling structure 10 provided by this application. The cooling structure 10 allows different regions of the battery 100 to swell adaptively according to changes in internal stress, reducing the possibility of adverse suppression on the swelling of the battery 100, thereby helping to improve the use safety of the battery 100 and improve the safety of the electric apparatus 1000.

The above descriptions are only preferred embodiments of this application and are not intended to limit this application. Any modifications, equivalent replacements, improvements, and the like made within the spirit and principles of this application should be included within the protection scope of this application.

## Claims

1. A cooling structure, **characterized in that**:
the cooling structure comprises a side plate and a cooling channel disposed on at least one side of the side plate;
wherein the side plate is configured to be deformable toward the side where the cooling channel is located, producing a deformable amount, wherein the deformable amount varies at different positions of the side plate.

2. The cooling structure according to claim 1, **characterized in that**:
from a central region of the side plate to an edge region of the side plate, the deformable amount of the side plate decreases.

3. The cooling structure according to claim 1 or 2, **characterized in that**:
the side plate comprises a first deformation portion, a second deformation portion, and a third deformation portion sequentially arranged from the central region to the edge region of the side plate;
wherein a deformable amount of the first deformation portion is greater than or equal to a deformable amount of the second deformation portion, and the deformable amount of the second deformation portion is greater than a deformable amount of the third deformation portion.

4. The cooling structure according to claim 3, **characterized in that**:
the side plate comprises two second deformation portions and two third deformation portions;
wherein the two second deformation portions are disposed on two opposite sides of the first deformation portion, and the two third deformation portions are disposed on two sides of the two second deformation portions facing away from the first deformation portion.

5. The cooling structure according to any one of claims 1 to 4, **characterized in that**:
the cooling structure comprises two side plates, wherein the two side plates are disposed opposite each other, and the cooling channel is disposed between the two side plates.

6. The cooling structure according to claim 5, **characterized in that**:
the cooling structure comprises multiple partition plates disposed between the two side plates;
wherein the partition plate extends along a first direction, the multiple partition plates are spaced apart along a second direction, and two adjacent partition plates and the two side plates enclose the cooling channel extending along the first direction; and
in the second direction, from a central region to an edge region of the side plate, the deformable amount of the side plate decreases; wherein the first direction is perpendicular to the second direction.

7. The cooling structure according to claim 6, **characterized in that**:
in the second direction, from the central region to the edge region of the side plate, the side plate comprises a first deformation portion, a second deformation portion, and a third deformation portion;
wherein a deformable amount of the first deformation portion is greater than a deformable amount of the second deformation portion, and the deformable amount of the second deformation portion is greater than a deformable amount of the third deformation portion.

8. The cooling structure according to claim 7, **characterized in that**:
the partition plates comprise a first partition plate connected to the first deformation portion at an angle and a second partition plate connected to the second deformation portion at an acute angle, wherein the acute angle between the second partition plate and the second deformation portion is smaller than the angle between the first partition plate and the first deformation portion.

9. The cooling structure according to claim 8, **characterized in that**:
the first partition plate is connected to the first deformation portion at an acute angle.

10. The cooling structure according to claim 8 or 9, **characterized in that**:
one or more second partition plates are provided, and multiple first partition plates are provided;
wherein a spacing between two adjacent second partition plates is greater than a spacing between two adjacent first partition plates;
and/or, a spacing between a second partition plate and a first partition plate that are adjacent to each other is greater than the spacing between two adjacent first partition plates.

11. The cooling structure according to claim 7, **characterized in that**:
the partition plates comprise multiple first partition plates connected to the first deformation portion and one or more second partition plates connected to the second deformation portion;
wherein a spacing between two adjacent second partition plates is greater than a spacing between two adjacent first partition plates;
and/or, a spacing between a second partition plate and a first partition plate that are adjacent to each other is greater than the spacing between two adjacent first partition plates.

12. The cooling structure according to claim 11, **characterized in that**:
the first partition plate is connected to the first deformation portion at an angle, the second partition plate is connected to the second deformation portion at an angle, and the angle between the second partition plate and the second deformation portion is less than or equal to the angle between the first partition plate and the first deformation portion.

13. The cooling structure according to any one of claims 8 to 12, **characterized in that**:
a plate thickness of the second partition plate is less than a plate thickness of the first partition plate;
and/or, the number of the second partition plates is less than the number of the first partition plates.

14. The cooling structure according to any one of claims 8 to 12, **characterized in that**:
a plate thickness of the first deformation portion is the same as a plate thickness of the second deformation portion, the plate thickness of the second partition plate is the same as a plate thickness of the first partition plate, and a plate thickness of the third deformation portion is greater than the plate thickness of the first deformation portion and the second deformation portion.

15. The cooling structure according to claim 14, **characterized in that**:
the plate thickness of the third deformation portion gradually increases in a direction leaving the second deformation portion, and two end portions of the two third deformation portions of the two side plates far away from the second deformation portion are hermetically connected.

16. A battery, **characterized in that**:
the battery comprises a battery cell and the cooling structure according to any one of claims 1 to 15, wherein at least one side of the side plate is in contact with a side surface of the battery cell.

17. The battery according to claim 16, **characterized in that**:
the battery cell is rectangular, and at least one side of the side plate is in contact with a largest surface of the battery cell.

18. The battery according to claim 16, **characterized in that**:
the cooling channel extends along the first direction, the battery includes multiple battery cells arranged sequentially along the first direction, and largest surfaces of the multiple battery cells are all in contact with a same side of the side plate; and
in a second direction perpendicular to the first direction, from the central region to the edge region of the side plate, the deformable amount of the side plate decreases.

19. An electric apparatus, **characterized in that**:
the electric apparatus comprises the battery according to any one of claims 16 to 18.
